# EUROPEAN PATENT APPLICATION

(11) **EP 4 538 247 A1**
(43) Date of publication of application: **16.04.2025**
(21) Application number: 22945655.3
(22) Date of filing: 29.12.2022
(51) Int. Cl.: C04B 35/26, C04B 35/622, C04B 35/626, H01F 1/10

(54) **PREPARATION METHOD FOR IMPROVING COMPRESSION STRENGTH OF PERMANENT MAGNETIC FERRITE ARC MAGNET**

(30) Priority: 06.06.2022 CN 202210629039
(71) Applicant: Hengdian Group DMEGC Magnetics Co., Ltd., Jinhua, Zhejiang 322118 (CN)
(72) Inventor: YANG, Wuguo, Jinhua, Zhejiang 322118 (CN); WU, Xiangliang, Jinhua, Zhejiang 322118 (CN); SHENTU, Jinang, Jinhua, Zhejiang 322118 (CN); LU, Jianliang, Jinhua, Zhejiang 322118 (CN); HE, Zhenyu, Jinhua, Zhejiang 322118 (CN)
(74) Representative: Kutzenberger Wolff & Partner
(86) International application number: PCT/CN2022/143451
(87) International publication number: WO 2023/236527

(57) **Abstract**

Disclosed is a preparation method for improving compressive strength of a permanent ferrite arc magnet, including the following steps: wet ball milling, magnetic field molding, sintering, grinding processing, compressive strength test, and finished product rate calculation. The particle size distribution of a slurry is controlled and the proportion of micro-size particles to large-size particles is reduced, to improve the particle size consistency. The probability of abnormal growth of grains during sintering is reduced, reducing the probability of lattice defects, reducing the grain size, and finally avoiding trans-granular fracture when subjected to bending load, and greatly lengthening a crack path of intergranular fracture, and improving the compressive strength. A self-made liquid dispersant is added to a ferrite slurry before the magnetic field molding to improve the fluidity of the slurry, thereby improving the consistency of the density of an arc magnet blank, making the shrinkage rate of each point of the blank tend to be consistent during sintering, reducing the surface pulling force, avoiding the propagation of micro-cracks caused by the surface pulling force, and finally improving the compressive strength of an arc magnet product and reducing the probability of the cracking of the arc magnet.

## Description

### Field of the Invention

The present disclosure is in the technical field of preparation of permanent ferrite materials, and in particular to a preparation method for improving compressive strength of a permanent ferrite arc magnet.

### Background of the Invention

Permanent ferrite is an inorganic non-metallic sintered ceramic material with mechanical performance of high hardness and low toughness. The permanent ferrite magnet is a fundamental functional material for permanent magnet direct current (DC) motors, meeting various motor use requirements in different environments. With high sensitivity and stability, it can be extensively applied to various motors with high power, high speed, and high torque, such as premium automotive motors (anti-lock braking system (ABS) motors, starter motors), motorcycle starter motors, household appliances, and electric tool motors. Due to the design requirements of rotary motors, whether used as a stator or rotor, permanent ferrite magnets are often designed in an arc, commonly referred to as arc magnets. Additionally, as the demand for miniaturization and energy efficiency of permanent magnet motors continues to rise, the performance requirements for permanent ferrite arc magnets are increasing. Therefore, the volume, particularly the thickness, is required to be smaller. Accordingly, the compressive strength of the arc magnets is also required to be stronger under equivalent conditions.

Chinese patent application CN101615464A discloses a formulation of a permanent ferrite material with high bending strength. Through formulation optimization, a permanent ferrite material with a bending strength of 0.8 to 1.2 * 108 N/m² is obtained. Chinese patent application CN1959868A discloses a process for adding a fluidity improver to a permanent ferrite slurry, reducing slurry resistance during wet molding, enhancing the degree of magnetic domain orientation during molding, decreasing the water content in the molded blank, improving blank strength, and ultimately enhancing the strength and magnetic characteristics of the sintered rare earth permanent ferrite. Chinese patent application CN102976738A discloses a manufacturing process for a permanent ferrite magnet with high compressive strength. The process involves placing the prepared arc magnet products in a refractory bowl, followed by placing in a furnace for heat preservation and tempering at 900°C, achieving the beneficial effects of not reducing product coercivity while achieving a strength increase of 30% or more. The above three patents propose a method for improving the strength of the permanent ferrite arc magnet from the aspects of material formulation, slurry fluidity improvement, and sintering and tempering processes, respectively, which is a detailed improvement in the conventional production process of permanent ferrite, rather than proposing a systematic approach for enhancing arc magnet strength based on fundamental mechanisms.

In addition, Chinese patent application CN112645705A discloses a process for improving the bending limit of a permanent ferrite arc magnet device, mainly by controlling the particle size distribution of the slurry after ball milling, the grouting speed during magnetic field molding, and the mesh of the grinding wheel during grinding, to improve the bending strength of the arc magnet without reducing the magnetic performance. The specific process parameters given in the patent include that the particle size distribution of the slurry is D0.10: 0.4 to 0.6 µm, D0.50: 0.8 to 1.0 µm, and D0.90: 1.9 to 2.0 µm; the single cavity grouting flow rate of the mold is 15-40 mm/s; the grinding wheel used during grinding is 150-400 mesh. Through the detailed optimization of three control processes, the patent attempts to reduce the growth rate and growth probability of cracks in the processing of the permanent ferrite arc magnet device, to achieve the effect of effectively improving the bending strength of the arc magnet. However, the patent controls the particle size distribution of the slurry by only controlling the ball milling time, without controlling the ball milling equipment, the ratio of steel balls, the ratio of balls, materials, and water, and the particle size of raw material coarse powder, so it is difficult to obtain a good particle size distribution in practical production.

Therefore, to meet the increasingly stringent requirements for the compressive strength of the current permanent ferrite arc magnet, a preparation method for improving the compressive strength of a permanent ferrite arc magnet is urgently needed.

### Summary of the Invention

An object of the present disclosure is to provide a preparation method for improving compressive strength of a permanent ferrite arc magnet, to solve the problems mentioned in the background art. The present disclosure provides a preparation method for improving compressive strength of a permanent ferrite arc magnet, which has the characteristics of good bending strength and compressive strength.

To achieve the above object, the present disclosure provides the following technical solutions: A preparation method for improving compressive strength of a permanent ferrite arc magnet includes the following steps:
(I) wet ball milling: adding an additive to permanent ferrite pre-sintered material powder, adding tap water of 1.0 to 1.5 times the mass of the pre-sintered material powder, stirring uniformly, and then transferring to a vertical two-stage cell mill for wet ball milling, to obtain slurry with an average particle size of 0.75 to 0.85 µm;
(II) magnetic field molding: adjusting water content of the slurry obtained in step (I), adjusting solid content of the slurry to 65±5 wt%, then adding a liquid dispersant, stirring uniformly, and then performing magnetic field molding through a mold to obtain molded blanks;
(III) sintering: the molded blanks obtained in step (II) being subjected to heat preservation at 300°C, removing moisture and the residual dispersant in the molded blanks, then heating to a sintering temperature under an air atmosphere before being subjected to heat preservation, to obtain permanent ferrite arc magnet semi-finished products;
(IV) grinding processing: the arc magnet semi-finished products obtained in step (III) being subjected to grinding processing with a multi-station grinding machine, to obtain permanent ferrite arc magnet finished products; and
(V) compressive strength test and finished product rate calculation: performing a visual inspection on the arc magnet products obtained in step (IV), removing various defective products and calculating a finished product rate, and finally randomly sampling several arc magnet products for a compressive strength test.

Further, in step (I), the permanent ferrite pre-sintered material powder does not contain waste magnetic steel powder and grinding waste material powder, coarse powder of the pre-sintered material powder has an average particle size of 4 to 6 µm, the additive has a content less than 2.0 wt% of the pre-sintered material powder, the additive includes at least silicon dioxide and calcium carbonate, and the additive has an average particle size of 2 to 3 µm.

Further, in step (I), a particle size of the obtained slurry reaches a D50 of 1.0 to 1.2 µm, D10 ≥ 0.5 µm, D90 ≤ 2.5 µm, and 3 ≤ D90/D10 ≤ 5.

Further, in step (I), the preparation method of wet ball milling using the vertical two-stage cell mill includes the following steps:
(1) feeding quantitatively coarse powder of ferrite pre-sintered material stored in a raw material storage tank into a batching tank through a screw conveyor;
(2) adding tap water of 1.2 to 1.5 times the total weight of the pre-sintered material powder before stirring, entering the batching tank through a control valve and a flow meter, and stirring and mixing thoroughly the pre-sintered material powder and the tap water through a stirrer, to prepare a coarse powder slurry;
(3) transferring the coarse powder slurry to a feeding tank by a discharge pump of the batching tank for storage, and then pumping continuously the coarse powder slurry into a primary cell mill to perform primary grinding;
(4) transferring the slurry processed by the primary cell mill into a transfer tank, and then pumping into a secondary cell mill to perform secondary grinding; and
(5) transferring the slurry processed by the secondary cell mill to a discharge tank, and adjusting water content to 35% to 38% before transferring to a storage tank, to obtain a desired molded slurry.

Further, grinding balls with different particle sizes of Φ2 to Φ8 mm are used as grinding media of the primary cell mill; a proportion of coarse balls of Φ6 mm or more is 40% to 50%, a proportion of fine balls of Φ3 mm or less is 10% to 20%, and the grinding balls are steel balls, alumina balls, or zirconia balls.

Further, grinding balls with different particle sizes of Φ1 to Φ3 mm are used as grinding media of the secondary cell mill; a proportion of coarse balls of Φ2.5 mm or more is 30% to 40%, and a proportion of fine balls of Φ1.5 mm or less is 15% to 30%, and the grinding balls are steel balls, alumina balls, or zirconia balls.

Further, the grinding balls have a hardness of 60 or more.

Further, in step (II), the liquid dispersant is 0.5 to 2.0 wt% of the weight of the pre-sintered material.

Further, in step (II), the liquid dispersant is prepared by mixing citric acid, aqueous ammonia with a concentration of 25%, solid sodium hydroxide, and tap water, and a preparation method includes the following steps:
(a) taking citric acid solid and tap water of equal mass, mixing and stirring uniformly until citric acid is completely dissolved;
(b) adding aqueous ammonia with a concentration of 25% of 0.5 to 1.5 times the mass of the added citric acid solid to the solution obtained in step (a); and
(c) adding solid sodium hydroxide to the solution obtained in step (b) before stirring uniformly, and adjusting a pH value of the solution to 4 to 7, to obtain the liquid dispersant.

Further, in step (IV), the processing includes at least chord length, width, inner and outer arcs, and chamfer of the arc magnet.

Compared to the prior art, the beneficial effects of the present disclosure are as follows:
1. The present disclosure uses a novel two-stage vertical cell milling process to perform wet ball milling on a ferrite pre-sintered material with a relatively uniform initial particle size, to achieve that the particle size distribution of the ball milled slurry satisfies D50 being 1.0 to 1.2 µm, D10≥0.5 µm, D90≤2.5 µm, and 3≤D90/D10≤5.
2. The present disclosure controls the particle size distribution of the slurry and reduces the proportion of the particles with a small size to large-size particles, to improve the particle size consistency; the probability of abnormal growth of grains during sintering is reduced, reducing the probability of lattice defects, reducing the grain size, and finally avoiding the trans-granular fracture when subjected to bending load, and greatly lengthening the crack path of the intergranular fracture, further improving the compressive strength.
3. The present disclosure adds a self-made liquid dispersant to the ferrite slurry before the magnetic field molding to improve the fluidity of the slurry, thereby improving the consistency of the density of the arc magnet blank, making the shrinkage rate of each point of the blank tend to be consistent during sintering, reducing the surface pulling force, avoiding the propagation of micro-cracks caused by the surface pulling force, and finally improving the compressive strength of the arc magnet product and reducing the probability of the cracking of the arc magnet.

### Detailed Description of the Embodiments

The technical solutions in the examples of the present disclosure will be described clearly and completely below in combination with the examples of the present disclosure. The described examples are not all but only part of examples of the present disclosure. All other examples obtained by those ordinarily skilled in the art based on the example in the present disclosure without creative work shall fall within the scope of protection of the present disclosure.

### Example 1

A preparation method for improving compressive strength of a permanent ferrite arc magnet in the example includes the following steps:
(I) 1.5 T of the pre-sintered material powder was automatically weighed from the raw material storage tank each time into the batching tank, about 25 kg of the additive was added, and 1.8 T of tap water was added, mixed thoroughly and evenly, transferred to the feeding tank for storage, batched four times continuously, totaling about 6T.
(II) The above crude slurry was continuously pumped into a primary cell mill to perform primary grinding.
(III) The slurry processed by the primary cell mill was transferred into a transfer tank before pumping into a secondary cell mill to perform secondary grinding.
(IV) The slurry processed by the secondary cell mill was transferred to a discharge tank, followed by adjusting water content to 36 wt% before transferring to a storage tank, to obtain a desired molded slurry.

The above primary cell mill used steel balls as grinding media, with a total ball loading amount of 12 T; the ratio of various sizes of steel balls was: 2.5 T of Φ8 mm steel balls, 4.0 T of Φ6 mm steel balls, 2.5 T of Φ4 mm steel balls, 2.0 T of Φ3.5 mm steel balls, and 1.0 T of Φ2.5 mm steel balls.

The above primary cell mill used zirconia balls as grinding media, with a total ball loading amount of 4.5 T; the ratio of various sizes of zirconia balls was: 1.2 T of Φ3 mm zirconia balls, 0.8 T of Φ2.5 mm zirconia balls, 2.0 T of Φ1.5 mm zirconia balls, and 0.5 T of Φ1.0 mm zirconia balls.

In the example, the average particle size and distribution of the subsequently molded slurry were controlled by adjusting process technical parameters such as the feed rate of the primary cell mill, and different feed rates corresponded to the test numbers of example 1-1, example 1-2, and example 1-3.

Comparative example 1: For the batch grinding test of the conventional ball milling process, the main steps were as follows:
1.5 T of pre-sintered material was weighed and poured into an adaptive type ball mill; the ball mill was filled with 9.0 T of steel balls; about 1.8 T of tap water was added; the rotation speed of the ball mill was 32 rpm, and the ball milling time was 16 h; then the material was discharged, followed by adjusting moisture content to about 36 wt% before transferring into a storage tank, to obtain the desired molded slurry.

Comparative Example 2: For type adjustment and ratio test of initial powder, the main steps were as follows:
The initial raw material powder was changed to 900 kg of pre-sintered material powder, 400 kg of waste magnetic steel powder, and 200 kg of grinding material powder, and the other main steps were the same as in Example 1.

The molded slurry of the above example and comparative examples was tested for average particle size and particle size distribution. The average particle size was tested by a WLP208 average particle size analyzer. The particle size distribution was tested by a Malvern laser particle size analyzer, with the results shown in Table 1.

**Table 1 Slurry particle size analysis data for Example 1 and Comparative examples**

| Item | Feed rate (kg/h) | Average particle size (µm) | Particle size distribution (µm) | | |
|---|---|---|---|---|---|
| | | | D10 | D50 | D90 |
| Example 1-1 | 300 | 0.78 | 0.50 | 1.02 | 2.25 |
| Example 1-2 | 350 | 0.81 | 0.62 | 1.08 | 2.38 |
| Example 1-3 | 400 | 0.83 | 0.63 | 1.16 | 2.45 |
| Comparative example 1 | - | 0.80 | 0.48 | 1.06 | 2.86 |
| Comparative example 2 | 350 | 0.82 | 0.42 | 1.13 | 2.95 |

The above slurry was subjected to magnetic field molding, followed by controlling the molding pressure of 2 MPa, the holding time of 10 s, and the magnetic field strength of 8000 Oe, to obtain corresponding arc magnet blanks.

The above-molded blanks were placed into an orbital electric kiln for sintering; the electric kiln had a sintering temperature of 1180°C and heat preservation of 80 min, and magnet semi-finished products were obtained after cooling in the furnace.

The above-sintered series arc magnet semi-finished products were subjected to grinding processing by a continuous grinding machine to obtain standard-sized permanent ferrite arc magnet products.
10 pieces were randomly sampled from the arc magnet products produced corresponding to the above example and comparative examples, a universal testing machine was used to test the compressive strength limit of arc magnets at an impact speed of 1 m/s, and the test results were shown in Table 2.

**Table 2 Compressive strength limit test results for arc magnet products in Example 1 and Comparative examples (units: N)**

| No. | Example 1-1 | Example 1-2 | Example 1-3 | Comparative example 1 | Comparative example 2 |
|---|---|---|---|---|---|
| 1 | 1280 | 1854 | 2012 | 1547 | 1247 |
| 2 | 1395 | 1574 | 1267 | 1245 | 1168 |
| 3 | 1695 | 1624 | 1169 | 1358 | 1256 |
| 4 | 1598 | 1265 | 1624 | 1149 | 1358 |
| 5 | 1743 | 1186 | 1247 | 1012 | 947 |
| 6 | 1089 | 1369 | 1354 | 1258 | 1952 |
| 7 | 1687 | 1247 | 1549 | 964 | 1057 |
| 8 | 1541 | 1152 | 1264 | 1039 | 1658 |
| 9 | 1325 | 1257 | 1054 | 889 | 1024 |
| 10 | 1158 | 1543 | 1627 | 1358 | 917 |
| Average | 1451 | 1407 | 1417 | 1182 | 1258 |

It can be seen from the above results that by using the vertical two-stage cell mill to control the particle size distribution of the slurry before molding, the average compressive strength limit of the arc magnets prepared under the same subsequent process conditions is significantly improved.

Furthermore, the average compressive strength of the arc magnets may be improved by optimizing the initial raw material magnetic powder, without adding waste magnetic steel powder and grinding material powder.

In the example, the waste magnetic steel powder was not added because the average particle size of the waste magnetic steel after a plurality of sintering and coarse grinding was generally 4 to 7 µm, but the hardness was greater, and it was not easy to grind in the subsequent wet ball milling process, therefore, it was easy to cause more coarse particles in the final slurry and too high D90, thereby causing a relative widening of the slurry particle size distribution region. The reason that no grinding material powder was added was that the average particle size of the grinding material powder was small, generally in the range of 2 to 4 µm, and the particle size distribution was non-uniform; therefore, ultra-fine particles were easily brought into the subsequent wet ball milling process, so that the D10 was too small, resulting in a relative widening of the slurry particle size distribution region.

### Example 2

The example differs from Example 1 in that, for the molded slurry of the above example 1-1, 0.8 wt% of liquid dispersant was added and stirred thoroughly to be uniform, and then the same process of the above example 1-1 was used to perform the trial production of arc magnets of the same specification, and the average particle size and particle size distribution of the above slurry was detected as shown in Table 3. Further, 10 pieces were randomly selected from the arc magnets prepared in subsequent batches to test the compressive strength limit, with the results shown in Table 4.

**Table 3 Average particle size and particle size distribution of slurry in Example 2**

| Item | Average particle size (µm) | Particle size distribution (µm) | | |
|---|---|---|---|---|
| | | D10 | D50 | D90 |
| Example 2 | 0.79 | 0.52 | 1.03 | 2.32 |

**Table 4 Compressive ultimate strength test results for arc magnets in Example 2 (units: N)**

| No. | 1 | 2 | 3 | 4 | 5 | 6 | 7 | 8 | 9 | 10 | Average |
|---|---|---|---|---|---|---|---|---|---|---|---|
| Compressive strength | 1698 | 1874 | 1254 | 1169 | 2178 | 1865 | 1657 | 1585 | 1247 | 1825 | 1635 |

It can be seen from the above data that by controlling the particle size distribution of the molded slurry and simultaneously adding a self-made liquid dispersant, the fluidity of the slurry during molding is improved, and the compressive strength limit of the arc magnet prepared under the same subsequent process conditions is further improved, and therefore the present disclosure has excellent technical effects.

In the example, the liquid dispersant was prepared by mixing citric acid, aqueous ammonia with a concentration of 25%, solid sodium hydroxide, and tap water, and the preparation method included the following steps:
(a) taking citric acid solid and tap water of equal mass, mixing and stirring uniformly until citric acid was completely dissolved;
(b) adding aqueous ammonia with a concentration of 25% of 1.0 times the mass of the added citric acid solid to the solution obtained in step (a); and
(c) adding solid sodium hydroxide to the solution obtained in step (b) before stirring uniformly, and adjusting a pH value of the solution to 4 to 7, to obtain the liquid dispersant.

In summary, the present disclosure uses a novel two-stage vertical cell milling process to perform wet ball milling on a ferrite pre-sintered material with a relatively uniform initial particle size, to ensure that the particle size distribution of the ball milled slurry satisfies D50 being 1.0 to 1.2 µm, D10≥0.5 µm, D90≤2.5 µm, and 3≤D90/D10≤5. The present disclosure controls the particle size distribution of the slurry and reduces the proportion of micro-size particles to large-size particles, to improve the particle size consistency; the probability of abnormal growth of grains during sintering is reduced, reducing the probability of lattice defects, reducing the grain size, and finally avoiding the trans-granular fracture when subjected to bending load, and greatly lengthening the crack path of the intergranular fracture, further improving the compressive strength. The present disclosure adds a self-made liquid dispersant to the ferrite slurry before the magnetic field molding to improve the fluidity of the slurry, thereby improving the consistency of the density of the arc magnet blank, making the shrinkage rate of each point of the blank tend to be consistent during sintering, reducing the surface pulling force, avoiding the propagation of micro-cracks caused by the surface pulling force, and finally improving the compressive strength of the arc magnet product and reducing the probability of the cracking of the arc magnet.

While examples of the present disclosure have been shown and described, it will be understood by those skilled in the art that various changes, modifications, substitutions, and alterations may be made to these examples without departing from the principles and spirit of the present disclosure, the scope of which is defined by the appended claims and their equivalents.

## Claims

1. A preparation method for improving compressive strength of a permanent ferrite arc magnet, comprising the following steps:
(I) wet ball milling: adding an additive to permanent ferrite pre-sintered material powder, adding tap water of 1.0 to 1.5 times the mass of the pre-sintered material powder, stirring uniformly, and then transferring to a vertical two-stage cell mill for wet ball milling, to obtain slurry with an average particle size of 0.75 to 0.85 µm;
(II) magnetic field molding: adjusting water content of the slurry obtained in step (I), adjusting solid content of the slurry to 65±5 wt%, then adding a liquid dispersant, stirring uniformly, and then performing magnetic field molding through a mold to obtain molded blanks;
(III) sintering: the molded blanks obtained in step (II) being subjected to heat preservation at 300°C, removing moisture and the residual dispersant in the molded blanks, then heating to a sintering temperature under an air atmosphere before being subjected to heat preservation, to obtain permanent ferrite arc magnet semi-finished products;
(IV) grinding processing: the arc magnet semi-finished products obtained in step (III) being subjected to grinding processing with a multi-station grinding machine, to obtain permanent ferrite arc magnet finished products; and
(V) compressive strength test and finished product rate calculation: performing a visual inspection on the arc magnet products obtained in step (IV), removing various defective products and calculating a finished product rate, and finally randomly sampling several arc magnet products for a compressive strength test.

2. The preparation method for improving compressive strength of a permanent ferrite arc magnet according to claim 1, wherein in step (I), the permanent ferrite pre-sintered material powder does not contain waste magnetic steel powder and grinding waste material powder, coarse powder of the pre-sintered material powder has an average particle size of 4 to 6 µm, the additive has a content less than 2.0 wt% of the pre-sintered material powder, the additive comprises at least silicon dioxide and calcium carbonate, and the additive has an average particle size of 2 to 3 µm.

3. The preparation method for improving compressive strength of a permanent ferrite arc magnet according to claim 1, wherein in step (I), a particle size of the obtained slurry reaches a D50 of 1.0 to 1.2 µm, D10 ≥ 0.5 µm, D90 ≤ 2.5 µm, and 3 ≤ D90/D10 ≤ 5.

4. The preparation method for improving compressive strength of a permanent ferrite arc magnet according to claim 1, wherein in step (I), the preparation method of wet ball milling using the vertical two-stage cell mill comprises the following steps:
(1) feeding quantitatively coarse powder of ferrite pre-sintered material stored in a raw material storage tank into a batching tank through a screw conveyor;
(2) adding tap water of 1.2 to 1.5 times the total weight of the pre-sintered material powder before stirring, entering the batching tank through a control valve and a flow meter, and stirring and mixing thoroughly the pre-sintered material powder and the tap water through a stirrer, to prepare a coarse powder slurry;
(3) transferring the coarse powder slurry to a feeding tank by a discharge pump of the batching tank for storage, and then pumping continuously the coarse powder slurry into a primary cell mill to perform primary grinding;
(4) transferring the slurry processed by the primary cell mill into a transfer tank, and then pumping into a secondary cell mill to perform secondary grinding; and
(5) transferring the slurry processed by the secondary cell mill to a discharge tank, and adjusting water content to 35% to 38% before transferring to a storage tank, to obtain a desired molded slurry.

5. The preparation method for improving compressive strength of a permanent ferrite arc magnet according to claim 4, wherein grinding balls with different particle sizes of Φ2 to Φ8 mm are used as grinding media of the primary cell mill; a proportion of coarse balls of Φ6 mm or more is 40% to 50%, a proportion of fine balls of Φ3 mm or less is 10% to 20%, and the grinding balls are steel balls, alumina balls, or zirconia balls.

6. The preparation method for improving compressive strength of a permanent ferrite arc magnet according to claim 4, wherein grinding balls with different particle sizes of Φ1 to Φ3 mm are used as grinding media of the secondary cell mill; a proportion of coarse balls of Φ2.5 mm or more is 30% to 40%, and a proportion of fine balls of Φ1.5 mm or less is 15% to 30%, and the grinding balls are steel balls, alumina balls, or zirconia balls.

7. The preparation method for improving compressive strength of a permanent ferrite arc magnet according to claim 5 or 6, wherein the grinding balls have a hardness of 60 or more.

8. The preparation method for improving compressive strength of a permanent ferrite arc magnet according to claim 1, wherein in step (II), the liquid dispersant is 0.5 to 2.0 wt% of the weight of the pre-sintered material.

9. The preparation method for improving compressive strength of a permanent ferrite arc magnet according to claim 1, wherein in step (II), the liquid dispersant is prepared by mixing citric acid, aqueous ammonia with a concentration of 25%, solid sodium hydroxide, and tap water, and a preparation method comprises the following steps:
(a) taking citric acid solid and tap water of equal mass, mixing and stirring uniformly until citric acid is completely dissolved;
(b) adding aqueous ammonia with a concentration of 25% of 0.5 to 1.5 times the mass of the added citric acid solid to the solution obtained in step (a); and
(c) adding solid sodium hydroxide to the solution obtained in step (b) before stirring uniformly, and adjusting a pH value of the solution to 4 to 7, to obtain the liquid dispersant.

10. The preparation method for improving compressive strength of a permanent ferrite arc magnet according to claim 1, wherein in step (IV), the processing comprises at least chord length, width, inner and outer arcs, and chamfer of the arc magnet.
